(19) Europäisches Patentamt
European Patent Office
Office européen des brevets

(11) **EP 4 768 270 A1**

(12) **EUROPEAN PATENT APPLICATION**

(43) Date of publication:
**01.07.2026 Bulletin 2026/27**

(21) Application number: **25218916.2**

(22) Date of filing: **27.11.2025**

(51) International Patent Classification (IPC):
***B60C 1/00*** *(2006.01)* ***B60C 9/20*** *(2006.01)*

(52) Cooperative Patent Classification (CPC):
**B60C 1/0016; B60C 9/2006; B60C 9/2009;**
B60C 2009/2019

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.12.2024 JP 2024231768**

(71) Applicant: **SUMITOMO RUBBER INDUSTRIES, LTD.**
**Kobe-shi, Hyogo 651-0072 (JP)**

(72) Inventor: **YAMAMOTO, Keisuke**
**Kobe-shi, 651-0072 (JP)**

(74) Representative: **TBK**
**Bavariaring 4-6**
**80336 München (DE)**

# (54) TIRE

(57) The present invention provides a tire having both dry grip performance and grip performance on snow improved in a well-balanced manner, and the tire comprises a tread portion (2) and a belt layer (8) provided on an inner side of the tread portion in a tire radial direction, the tread portion is formed from a rubber composition containing styrene-butadiene rubber having a styrene content of 25% by mass or less as a rubber component, the belt layer includes a metal cord as a reinforcing cord, in at least one layer, the metal cords is arranged to form an angle of 30 degrees or more with respect to a tire circumferential direction, and a ratio (St/AG), calculated from a value of the styrene content St (% by mass) of the styrene-butadiene rubber and a value of the angle AG (degrees) formed by the metal cord with respect to the tire circumferential direction, is less than 0.8.

[Figure 1]

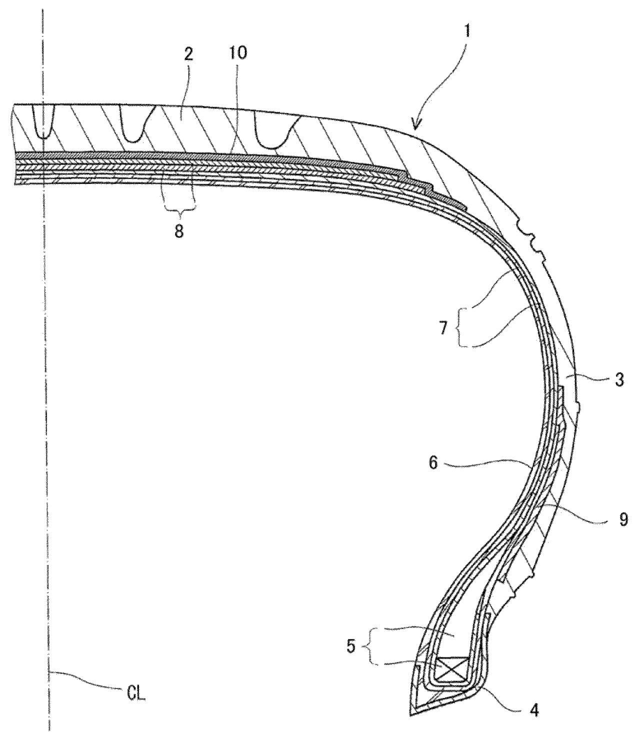


EP 4 768 270 A1

## Description

[TECHNICAL FIELD]

The present invention relates to a tire.

[BACKGROUND ART]

To respond to large changes in outside temperature and road surface conditions, there is a strong demand for improved dry grip performance and grip performance on snow in tires, and various technologies have been proposed (for example, Patent Documents 1 and 2). However, they cannot yet be said to have improved dry grip performance and grip performance on snow in a well-balanced manner, and further improvement is strongly desired.

[Prior art documents]

[Patent documents]

[Patent Document 1] JP 2016-094552 A
[Patent Document 2] JP 2024-101827 A

[SUMMARY OF THE INVENTION]

[PROBLEM TO BE SOLVED BY THE INVENTION]

An object of the present invention is to provide a tire in which both dry grip performance and grip performance on snow are improved in a well-balanced manner.

[MEANS FOR SOLVING THE PROBLEMS]

The present invention is

a tire comprising a tread portion and a belt layer provided on an inner side of the tread portion in a tire radial direction, wherein
the tread portion is formed from a rubber composition containing styrene-butadiene rubber having a styrene content of 25% by mass or less as a rubber component,
the belt layer includes a metal cord as a reinforcing cord,
the metal cord is arranged to form an angle of 30 degrees or more with respect to a tire circumferential direction in at least one of the belt layer,
a ratio (St/AG), calculated from a value of the styrene content St (% by mass) of the styrene-butadiene rubber and a value of the angle AG (degrees) formed by the metal cord with respect to the tire circumferential direction, is less than 0.8.

[EFFECTS OF THE INVENTION]

According to the present invention, it is possible to provide a tire in which both dry grip performance and grip performance on snow are improved in a well-balanced manner.

[BRIEF EXPLANATION OF DRAWINGS]

Figure 1 is a schematic cross-sectional view illustrating the structure of a tire according to one embodiment of the present invention.
Figure 2 is a schematic diagram illustrating an arrangement of belt layers in one embodiment of the present invention.

[EMBODIMENTS FOR CARRYING OUT THE INVENTION]

[1] Features of a tire according to the present invention

First, features of a tire according to the present invention are described.

1. Overview

The tire, according to the present invention, comprises a tread portion and a belt layer provided on an inner side of the tread portion in a tire radial direction. The tread portion is formed from a rubber composition (rubber composition for tread) containing styrene-butadiene rubber (SBR) having a styrene content of 25% by mass or less as a rubber component. The belt layer includes a metal cord as reinforcing cord. And the metal cord is arranged to form an angle of 30 degrees or more with respect to a tire circumferential direction in at least one of the belt layer. Further, a ratio (St/AG), calculated from a value of the styrene content St (% by mass) of the styrene-butadiene rubber and a value of an angle AG (degrees) formed by the metal cord with respect to the tire circumferential direction, is less than 0.8.

These features make it possible to provide a tire having both dry grip performance and grip performance on snow improved in a well-balanced manner, as described later.

In the present invention, the tread portion refers to a region forming a ground contact surface of a tire, and indicates a portion provided on an outer side in a tire radial direction of components containing fiber materials, such as a carcass portion, a belt layer, and a belt reinforcing layer.

2. Mechanism of effect manifestation in a tire according to the present invention

The mechanism, by which the effects described above are exhibited in the tire according to the present invention, is thought to be as follows.

(1) Content of SBR in the rubber composition for tread

In the tire according to the present invention, the tread portion is formed from a rubber composition containing styrene-butadiene rubber having a styrene content of 25% by mass or less as a rubber component.

Since a styrene portion of SBR exhibits high heat generation in high-temperature environments, it is thought that, by containing SBR in the rubber composition for tread, the tire is improved in conformity to road surfaces and exhibits improved dry grip performance.

However, since, in low-temperature environments, SBR increases in rigidity as a rubber component, causes conformity to road surfaces to decrease, and may cause grip performance on snow to decrease.

Therefore, in the present invention, the styrene content of SBR contained as a rubber component is controlled to 25% by mass or less.

SBR having a low styrene content of 25% by mass or less has a low glass transition temperature (Tg), and is, in a rubber component, suppressed in aggregation of its styrene portion, allowing the rubber composition to maintain softness even at a low temperature and to be improved in conformity to road surfaces.

At the same time, it is thought that minute styrene domains can be formed appropriately on surface of the rubber composition to bite easier into road surfaces, can generate friction with molecular chains of other polymers to generate heat appropriately even in low-temperature environments, generate appropriate friction with snowy road surfaces to bite into road surfaces, and improve grip performance on snow.

As described above, it can be thought that, by including SBR having a low styrene content of 25% by mass or less as a rubber component, both dry grip performance and grip performance on snow are improved in a well-balanced manner.

(2) Belt layer

In the tire according to the present invention, a belt layer includes a metal cord (hereinafter also referred to as "belt cord") as a reinforcing cord, and, in at least one of the layer, the belt cord is arranged to form an angle (belt cord angle) of 30 degrees or more, with respect to a tire circumferential direction.

It is thought that, by providing such a belt layer, rigidity of the tire in a rotational direction is reduced, to improve conformity of a ground contact surface of the tread portion to road surfaces even in low-temperature environments, thereby improving grip performance on snow.

(3) Relationship between styrene content of SBR and belt cord angle

In the present invention, the ratio (St/AG), calculated from the styrene content St (% by mass) of SBR and the belt cord angle AG (degrees), is controlled to be less than 0.8 This makes it possible to efficiently obtain both conformity to road

surfaces in low-temperature environments and heat generation in high-temperature environments, thereby improving both dry grip performance and grip performance on snow in a well-balanced manner.

In the present invention, it is thought that a tire having both dry grip performance and grip performance on snow improved in a well-balanced manner can be obtained by synergistic effect of the effects (1) to (3) described above.

[2] More preferred embodiments of the tire according to the present invention

The tire according to the present invention can achieve even greater effects by employing the following embodiments.

1. Rubber composition for tread

(1) Styrene content of SBR

In the present invention, as described above, the rubber composition for tread contains SBR having a styrene content of 25% by mass or less as a rubber component, and it is thought that, as the styrene content decreases, a glass transition temperature (Tg) also decreases, thereby further improving conformity of the tire to road surfaces in low-temperature environments, and further improving grip performance on snow.

Specifically, as described above, the content is limmited to 25% by mass or less, but from the viewpoint of improving grip performance on snow, it is preferably 24% by mass or less, 20% by mass or less, or 15% by mass or less. On the other hand, from another viewpoint (viewpoint of durability), it is preferably 4% by mass or more, 5% by mass or more, 6% by mass or more, or 10% by mass or more.

In the above, "rubber composition containing SBR having a styrene content of 25% by mass or less as a rubber component" means that the styrene content in the entire SBR is 25% by mass or less.

That is, when a single styrene-containing polymer (SBR, styreneisoprene copolymer, styrene-ethylene copolymer, etc.) is contained as a rubber component, it is indicated that said styrene-containing polymer has styrene content of 25% by mass or less. When a plurality of styrene-containing polymers are contained as rubber components, it is indicated that the value of styrene content, obtained by dividing the sum of products of the styrene content (% by mass) in each polymer and the blending amount (parts by mass) of each polymer with respect to 100 parts by mass of rubber components, by the sum of the blending amounts (parts by mass) of each polymer with respect to 100 parts by mass of rubber components, is 25% by mass or less.

More specifically, when 100 parts by mass of the rubber component contain, as styrene-containing polymers, SBR1 (X1 parts by mass) having a styrene content of S1 % by mass and SBR2 (X2 parts by mass) having a styrene content of S2 % by mass, it is indicated that the styrene content calculated from the formula $\{(S1 \times X1) + (S2 \times X2)\}/(X1 + X2)$ is 25% by mass or less.

Furthermore, in the case of a rubber composition after vulcanization, the styrene content can also be calculated by determining the amount of styrene contained in the rubber component using solid-state nuclear magnetic resonance (solid-state NMR) or Fourier transform infrared spectroscopy (FTIR).

(2) Isoprene rubber content

In the present invention, preferably 10 parts by mass or more, 15 parts by mass or more, 16 parts by mass or more, 20 parts by mass or more, or 23 parts by mass or more with respect to 100 parts by mass of rubber components of an isoprene-based rubber are contained together with the above-described SBR having styrene content of 25% by mass or less from the viewpoint of effects of the present invention (improving dry grip performance and grip performance on snow). On the other hand, preferably 40 parts by mass or less, 35 parts by mass or less, 30 parts by mass or less, or 23 parts by mass or less of the isoprene-based rubber are contained from another viewpoint (viewpoint of durability)

By including an appropriate content of an isoprene-based rubber, durability is improved, and phase separation structure is formed between SBR and the isoprene-based rubber, resulting in a mixture of microscopic layers of different hardness within a rubber phase, which is thought to improve both dry grip performance and dry grip performance on snow in a well-balanced manner further.

Specific examples of the isoprene-based rubber include natural rubber (NR), reformed natural rubber (reformed NR), modified natural rubber (modified NR), and synthetic polyisoprene [isoprene rubber (IR), modified isoprene rubber (modified IR)], in which NR is preferred because of excellent strength. For NR, rubbers common in the tire industry, such as SVR-L, SIR20, RSS#3, and TSR20 may be used.

(3) Content of Silica

In the present invention, from the viewpoint of effects of the present invention (improving dry grip performance and grip performance on snow), the rubber composition for tread preferably contains 80 parts by mass or more of silica as a reinforcing filler with respect to 100 parts by mass of a rubber component, and more preferably contains 90 parts by mass or more, 100 parts by mass or more, 120 parts by mass or more, 130 parts by mass or more, 140 parts by mass or more, or 150 parts by mass or more. On the other hand, from another viewpoint (viewpoint of kneading processability and molding processability of rubber composition), it is preferable that 180 parts by mass or less, 160 parts by mass or less, 150 parts by mass or less, or 140 parts by mass or less of silica is contained.

By containing such a large content of silica, it is thought that friction between silica and minute styrene domains forming on a rubber surface is more likely to occur, further improving heat generation in high-temperature environments and thereby further improving dry grip performance.

Furthermore, since silica has OH groups on its surface, adding silica to a rubber composition for tread creates hydrogen bonds and interacts between silica surfaces and rubber components. This makes it easier to generate and transmit force within the rubber during running, which is thought to further improve dry grip performance. Furthermore, the OH groups on the surface can capture ozone, and improve ozone resistance and, as a result, improve tire durability.

2. Belt layer

(1) Belt cord

As described above, in the present invention, the belt layer includes a metal cord as a belt cord, and it is preferable to use a steel cord as the metal cord, and among them, a steel cord made of a monofilament (single wire) (monofilament steel cord) is preferable. A monofilament cord is less likely to elongate and can suppress elongation of the belt layer and exert sufficient restraint on the tread portion, which is thought to further improve dry grip performance.

In the present invention, from the viewpoint of effects of the present invention (improving dry grip performance and grip performance on snow), the diameter of the belt cord is preferably 0.70 mm or less, 0.65 mm or less, 0.60 mm or less, 0.55 mm or less, or 0.50 mm or less. On the other hand, from another viewpoint (viewpoint of durability), the diameter is preferably 0.30 mm or more, 0.35 mm or more, 0.40 mm or more, or 0.45 mm or more.

The diameter of the belt cord can be measured in accordance with the test method specified in JIS G3510:1992 "Test Methods for Steel Tire Cords". The "diameter of a cord" refers to a diameter when a circumscribing circle of a cross section perpendicular to a longitudinal direction of the cord is a perfect circle, or refers to a diameter of an equivalent circle (a diameter of a circle, which is assumed as a perfect circle having the same cross-sectional area) when the circumscribing circle is an ellipse or the like.

In the present invention, the number of cords present in a width of 50 mm of the belt cord (ENDS: cords/5 cm) is preferably 20 cords/5 cm or more, 25 cords/5 cm or more, 30 cords/5 cm or more, 35 cords/5 cm or more, 40 cords/5 cm or more, or 45 cords/5 cm or more from the viewpoint of effects of the present invention (improving dry grip performance and grip performance on snow). On the other hand, from another viewpoint (viewpoint of durability), it is preferably 60 cords/5 cm or less, 55 cords/5 cm or less, 50 cords/5 cm or less, or 45 cords/5 cm or less.

The above-mentioned ENDS of the belt code refers to the number of cords arranged within a width of 50 mm. The number of ENDS can be determined as the arithmetic mean of, for example, in a cross-section cut along a meridian of the tire, the number of cords in the region extended 50 mm in the tire axial direction from the end of the cross-section of the cord located at one side end in the tire axial direction (including at least partially overlapping cords with the aforementioned region), the number of cords in the region extended 50 mm in the opposite tire axial direction from the end of the cross-section of the cord located at the other side end in the tire axial direction, and the number of cords in the regions extended 25 mm in both the one-side and other-side directions from the tire equatorial plane.

Alternatively, the number of reinforcing cords may be determined simply by cutting a cross-sectional section along a meridian of the tire having a thickness of 2 to 4 cm in the tire radial direction from a tire mounted on a standardized rim, with an internal pressure of 250 kPa and no load, measuring the number of reinforcing cords arranged within a width of 5 to 10 cm centered on the tire equatorial plane, and calculating the average number per 5 cm.

Here, the "standardized rim" is a rim defined for each tire in a standard system including a standard on which the tire is based. For example, in the case of JATMA (Japan Automobile Tire Association), it is a standardized rim in applicable sizes described in "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers to a rim that can be assembled and can maintain internal pressure, that is, the rim that does not cause air leakage from between the rim and the tire, and has the smallest rim diameter, and then the narrowest rim width.

(2) Belt cord angle

As described above, in the present invention, the belt cord angle is controlled to 30 degrees or more with respect to the tire circumferential direction, but from the viewpoint of effects of the present invention (improving dry grip performance and grip performance on snow), preferably 32 degrees or more, or 34 degrees or more. On the other hand, from another viewpoint (viewpoint of durability), the belt cord angle is preferably controlled to 44 degrees or less, 42 degrees or less, 40 degrees or less, or 39 degrees or less. As a result of this, it is thought that grip performance on snow can be further improved.

The belt layer may be composed of one layer, but preferably two or more layers. In this case, the belt cord angle of the radially outermost belt layer is preferably 30 degrees or more, 32 degrees or more, 34 degrees or more, or 36 degrees or more. On the other hand, from another viewpoint (viewpoint of durability), it is preferably 45 degrees or less, 44 degrees or less, 42 degrees or less, 40 degrees or less, or 39 degrees or less. The second and subsequent layers are preferably arranged at angles opposite each other. For example, when two belt layers are arranged, it is preferable that the belt cord angles of the respective layers are opposite to each other and are 30 degrees or more.

3. Relationship between styrene content of SBR and belt cord angle

As described above, in the present invention, the ratio (St/AG) calculated from the styrene content St (% by mass) of SBR, and the belt cord angle AG (degrees) is controlled to less than 0.8. However, from the viewpoint of effects of the present invention (improving dry grip performance and grip performance on snow), the ratio is preferably controlled to 0.75 or less, less than 0.7, less than 0.65, 0.62 or less, 0.50 or less, 0.40 or less, or 0.31 or less. As a result of this, since conformity in low-temperature environments is improved, it is thought that grip performance on snow is improved further, and both dry grip performance and grip performance on snow can be improved in a more well-balanced manner. On the other hand, from another viewpoint (viewpoint of durability), it is preferably more than 0.25, more than 0.3, 0.31 or more, 0.40 or more, 0.50 or more, 0.62 or more, 0.65 or more, or 0.75 or more. From another viewpoint (viewpoint of steering stability at low temperatures), it is preferably 0.30 or less, 0.25 or less, or 0.2 or less.

[3] Embodiments

Hereinafter, the present invention will be described in detail based on the embodiments.

1. Tire according to the present embodiment

Figure 1 is a schematic cross-sectional view illustrating a tire according to this embodiment, showing a tire meridian cross-section including the tire's rotation axis in a standardized state. In Figure 1, the vertical direction is the radial direction of the tire, the horizontal direction is the rotational axis direction of the tire, and the direction perpendicular to the paper surface is the circumferential direction of the tire. Note that the shape of this tire is symmetrical with respect to the equatorial plane except for the tread pattern, so Figure 1 shows 1/4 of the entire tire. The dash-dotted line CL represents the tire's equatorial plane.

Here, "standardized tire state" refers to a state in which a tire is mounted on a standardized rim, is inflated to standardized internal pressure, and is not under load. Note that "standardized internal pressure" refers to an air pressure set for each tire by each standard in the standard system including the standard on which the tire is based. For JATMA (Japan Automobile Tire Manufacturers Association), it refers to the "maximum air pressure", for ETRTO (The European Tyre and Rim Technical Organization), it refers to the "INFLATION PRESSURE", and for TRA (The Tire and Rim Association, Inc.), it refers to the maximum value listed in the table "TIRE LOAD LIMITS AT VARIOUS COLD INFLATION PRESSURES." As in the case of "standardized rim", JATMA, ETRTO, and TRA are referred to in that order, and their standards are followed, and if an applicable size is available at the time of reference, that standard should be followed. In the case of tires that are not specified in the standard, it refers to the standardized internal pressure (250 kPa or more) of another tire size (defined in the standard) that is listed using the standardized rim as a standardized rim. Note that, if multiple standardized internal pressures of 250 kPa or more are listed, it refers to the minimum value among them.

As shown in Figure 1, a tire 1 comprises a tread portion 2, a pair of sidewall portions 3, a pair of chafers 4, a pair of bead portions 5, an inner liner 6, a carcass portion 7, a belt layer 8, a pair of fillers 9, and a band 10, and the carcass portion 7, the belt layer 8, the band 10, and the tread portion 2 are arranged from an inner side to an outer side in an tire radial direction.

Figure 2 is a schematic diagram illustrating arrangement of belt layers in this embodiment. As shown in Figure 2, the belt layer 8 comprises two layers of an inner layer 8a and an outer layer 8b, and belt cords 11 are arranged in each layer. In the inner layer 8a and the outer layer 8b, the belt cords 11 of each layer are arranged to cross each other in opposite directions with respect to the equatorial plane CL of the tire, i.e., the circumferential direction of the tire.

As described above, the angle AG between the belt cord 11 and the equatorial plane CL (belt cord angle) is 30 degrees or more in at least one of the inner layer 8a or the outer layer 8b.

It is thought that by adopting such a configuration and appropriately controlling parameters described above, both dry grip performance and grip performance on snow can be improved in a well-balanced manner.

## 2. Rubber composition

In the tire according to the present invention, a rubber composition forming a tread portion (rubber composition for tread) can be obtained by appropriately adjusting the types and amounts of various compounding materials described below such as rubber components, fillers, plasticizer components (oil, resin component, etc.), vulcanizing agents, and vulcanization accelerators.

### (1) Compounding materials

#### (a) Rubber component

As described above, the rubber component included in the rubber composition for tread contains SBR having a styrene content of 25% by mass or less, may contain an isoprene-based rubber as needed, and may further contain other rubbers. The other rubbers are not particularly limited, and examples thereof include rubbers (polymers) commonly used for producing tires, for example, diene-based rubbers such as butadiene rubber (BR) and nitrile rubber (NBR), butyl- based rubbers such as butyl rubber, and thermoplastic elastomers such as styrene-butadiene-styrene block copolymer (SBS) and styrene-butadiene block copolymer (SB).

##### (i) SBR

In the present invention, styrene content in SBR component is 25% by mass or less, as described above. The weight-average molecular weight of SBR is preferably, for example, more than 100,000, and less than 2,000,000. Vinyl content (content of 1,2-bonded butadiene) inf SBR is preferably, for example, more than 5% by mass, 10% by mass or more, 15% by mass or more, or 17 parts by mass or more. On the other hand, from another viewpoint (viewpoint of durability), it is preferably less than 70 % by mass, 60% by mass or less, 50% by mass or less, or 42 parts by mass or less. Determination of structure of SBR (measurement of styrene content and vinyl content) can be conducted by solid-state nuclear magnetic resonance (solid-state NMR) or Fourier transform infrared spectrophotometer (FTIR), as described above for styrene content, and can be performed using, for example, JNM-ECA series instrument manufactured by JEOL Ltd.

The SBR is not particularly limited, and for example, emulsion polymerized styrene butadiene rubber (E-SBR), solution polymerized styrene butadiene rubber (S-SBR), and the like can be used. SBR may be either non-modified SBR or modified SBR. Further, hydrogenated SBR obtained by hydrogenating the butadiene part in SBR may be used. The hydrogenated SBR may be obtained by subsequently hydrogenating the BR part in SBR, or a similar structure may be obtained by copolymerization of styrene, ethylene, and butadiene.

The modified SBR is preferably an SBR having a functional group that interacts with a filler such as silica. Examples thereof include end-modified SBR (end-modified SBR having the above functional group at the terminal) in which at least one end of the SBR is modified with a compound having the above functional group (modifying agent), main chain modified SBR having the functional group in the main chain, main chain terminal modified SBR having the functional group at the main chain and the terminal (for example, a main chain end modified SBR having the above functional group to the main chain and having at least one end modified with the above modifying agent), and end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

As the modified SBR, for example, SBR modified with a compound (modifying agent) represented by the following formula can be used.

[Chemical formula 1]

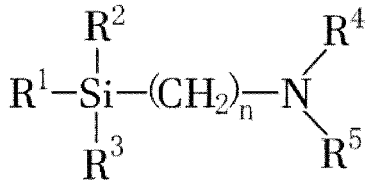

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure together with the nitrogen atom. n represents an integer.

As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.

$R^1$, $R^2$ and $R^3$ are preferably alkoxy groups (preferably alkoxy groups having preferably 1 to 8 carbon atoms, more preferably 1 to 4 carbon atoms). $R^4$ and $R^5$ are preferably alkyl groups (preferably alkyl groups having 1 to 3 carbon atoms). Preferably, n is 1 to 5, more preferably 2 to 4, and further preferably 3. When $R^4$ and $R^5$ bond to form a ring structure together with a nitrogen atom, it is preferred to form a 4- to 8-membered ring. Incidentally, the alkoxy groups also may be cycloalkoxy groups (cyclohexyloxy groups, etc.) and aryloxy groups (phenoxy groups, benzyloxy groups, etc.).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include polyglycidyl ethers of polyhydric alcohols such as ethylene glycol diglycidyl ether, glycerin triglycidyl ether, trimethylolethanetriglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4' - diglycidyl-diphenylmethylamine, and 4,4'-diglycidyl-dibenzylmethylamine; diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane; amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride; epoxy group-containing silane compounds such as 1,3-bis- (glycidyloxypropyl) -tetramethyldisiloxane, and (3-glycidyloxypropyl) -pentamethyldisiloxane; sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3-(tripropoxysilyl) propyl] sulfide, (trimethylsilyl) [3- (tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide; N-substituted aziridine compound such as ethyleneimine and propyleneimine; alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane; (thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis- (tetraethylamino) benzophenone; benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde; N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N- substituted piperidone such as methyl-2-piperidone, N-vinyl-2-piperidone, and N-phenyl-2-piperidone; N-substituted lactams such as N-methyl -ε-caprolactam, N-phenyl-ε-caprolactum, N-methyl-ω-laurilolactum, N-vinyl-(ω-laurilolactum, N-methyl-β-propiolactam, and N-phenyl-β-propiolactam; and N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 - bis(methylethylamino)-4-heptanone. The modification with the above compound (modifying agent) can be carried out by a known method.

As the SBR, for example, SBR manufactured and sold by Sumitomo Chemical Co., Ltd., ENEOS Materials Co., Ltd., Asahi Kasei Co., Ltd., Nippon Zeon Co., Ltd., etc. can be used. Note that SBR may be used alone or in combination of two or more.

From effects of the present invention (improving dry grip performance and grip performance on snow), the content of SBR with respect to 100 parts by mass of a rubber component is preferably 30 parts by mass or more, 40 parts by mass or more, 50 parts by mass or more, or 60 parts by mass or more. On the other hand, from another viewpoint (viewpoint of durability), the content is preferably 90 parts by mass or less, 80 parts by mass or less, or 70 parts by mass or less.

(ii) Isoprene-based rubber

Examples of isoprene-based rubber include natural rubber (NR), isoprene rubber (IR), reformed NR, modified NR, and modified IR. Among them, NR is preferred from the standpoint of excellent strength.

As the NR, for example, SVR-L, SIR20, RSS#3, TSR20, etc., which are common in the tire industry, can be used. As the IR, there is no particular limitation, and for example, IR2200 manufactured by Nippon Zeon Co., Ltd. and the like, which are common in the tire industry, can be used. As the reformed NR, deproteinized natural rubber (DPNR), ultra-pure natural rubber (UPNR), and the like can be used. As the modified NR, epoxidized natural rubber (ENR), hydrogenated natural rubber (HNR), grafted natural rubber, and the like can be used. As the modified IR, epoxidized isoprene rubber, hydrogenated isoprene rubber, grafted isoprene rubber, and the like can be used. These may be used alone or in combination of two or more. The content of the isoprene-based rubber with respect to 100 parts by mass of the rubber component is as described above.

(iii) BR

In the present invention, the rubber composition for tread may contain BR, if necessary. In this case, from the viewpoint of effects of the present invention (improving dry grip performance and grip performance on snow), the content of BR with respect to 100 parts by mass of a rubber component is preferably 15 parts by mass or more, 17 parts by mass or more, 20 parts by mass or more, or 24 parts by mass or more. On the other hand, from another viewpoint (viewpoint of durability), the content of BR is preferably 40 parts by mass or less, 35 parts by mass or less, or 24 parts by mass or less.

Weight-average molecular weight of BR is, for example, preferably more than 100,000, more than 200,000, more than 300,000, more than 400,000, or more than 440,000. On the other hand, the upper limit is preferably less than 2,000,000, less than 1,500,000, 1,000,000 or less, or less than 500,000. Vinyl content of BR is, for example, preferably more than 1% by mass, or 1.5% by mass or more. On the other hand, the upper limit is preferably less than 30% by mass, less than 20% by mass, or less than 10% by mass. Cis content of BR is, for example, preferably more than 1% by mass, more than 20% by mass, more than 40% by mass, more than 60% by mass, or more than 80% by mass. The upper limit is preferably less than 98% by mass, or 97% by mass or less. Trans content of BR is, for example, more than 1% by mass, and less than 60% by mass. The cis content can be measured by infrared absorption spectroscopy.

The BR is not particularly limited, and BR with a high cis content (cis content of 90% or more), BR with a low cis content, BR containing syndiotactic polybutadiene crystals, etc. can be used. The BR may be either unmodified BR or modified BR. As the modified BR, for example, a BR modified with a compound (modifying agent) represented by the following formula can be used.

[Chemical formula 1]

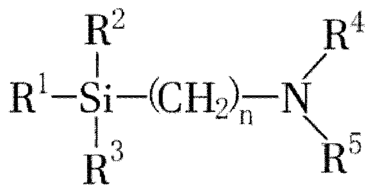

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure

together with the nitrogen atom. n represents an integer.

Examples of the modified BR modified with a compound (a modifying agent) represented by the above formula include BR whose polymerization end (active end) is modified with a compound represented by the above formula.

$R^1$, $R^2$ and $R^3$ are preferably alkoxy groups (alkoxy groups preferably having 1 to 8 carbon atoms, more preferably 1 to 4 carbon atoms). $R^4$ and $R^5$ are preferably alkyl groups (alkyl groups preferably having 1 to 3 carbon atoms). Preferably, n is 1 to 5, more preferably 2 to 4, and further preferably 3. When $R^4$ and $R^5$ bond to form a ring structure together with a nitrogen atom, it is preferably to form a 4- to 8-membered ring. Incidentally, alkoxy groups also may include cycloalkoxy groups (cyclohexyloxy group, etc.) and aryloxy groups (phenoxy group, benzyloxy group, etc.).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified BR, a modified BR modified with the following compound (modifying agent) can also be used. Examples of the modifying agent include polyglycidyl ethers of polyhydric alcohols such as ethylene glycol diglycidyl ether, glycerin triglycidyl ether, trimethylolethanetriglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4' - diglycidyl-diphenylmethylamine, and 4,4'-diglycidyl-dibenzylmethylamine; diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane; amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride; epoxy group-containing silane compounds such as 1,3-bis- (glycidyloxypropyl) -tetramethyldisiloxane, and (3-glycidyloxypropyl) -pentamethyldisiloxane; sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3-(tripropoxysilyl) propyl] sulfide, (trimethylsilyl) [3- (tributoxysilyl) propyl] sulfide, (trimethylsilyl) [3-(methyldimethoxysilyl) propyl] sulfide, (trimethylsilyl) [3- (methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide; N-substituted aziridine compound such as ethyleneimine and propyleneimine; alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane; (thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis- (tetraethylamino) benzophenone; benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde; N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N- substituted piperidone such as methyl-2-piperidone, N-vinyl-2-piperidone, and N-phenyl-2-piperidone; N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-6-propiolactam; and N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 - bis(methylethylamino)-4-heptanone. The modification with the above compound (modifying agent) can be carried out by a known method. These modified BR may be used alone or in combination of two or more.

In the rubber composition for tread, the content of BR in 100 parts by mass of the rubber component is preferably 10 parts by mass or more, 15 parts by mass or more, or 25 parts by mass or more. On the other hand, it is preferably 30 parts by mass or less, 25 parts by mass or less, or 15 parts by mass or less.

(d) Other rubber components

The rubber composition may contain, as other rubber components, rubbers (polymers) that are commonly used in the manufacture of tires, such as nitrile rubber (NBR), as necessary.

The raw materials (monomers) of the above-mentioned synthetic rubbers such as SBR and BR may be derived from underground resources such as petroleum and natural gas, or may be recycled from rubber products such as tires or non-rubber products such as polystyrene.

Monomers obtained by recycling (recycled monomers) are not particularly limited, and examples thereof include

recycled isoprene, recycled butadiene, and recycled aromatic vinyl. Examples of the above-mentioned butadiene include 1,2-butadiene and 1,3-butadiene. Examples of the aromatic vinyl include, but are not particularly limited to, styrene. Among them, it is preferable to use recycle-derived isoprene (recycled isoprene), recycle-derived butadiene (recycled butadiene), and/or recycle-derived styrene (recycled styrene) as raw materials.

The method for producing the recycled monomer is not particularly limited, and examples thereof include synthesis from recycle-derived naphtha obtained by decomposing rubber products such as tires. The method for producing the recycle-derived naphtha is also not particularly limited, and examples thereof include decomposing rubber products such as tires under high temperature and pressure, decomposing with microwaves, or mechanically crushing and then extracting.

Furthermore, the raw materials (monomers) of synthetic rubbers such as IR, SBR, and BR may be derived from biomass. Here, biomass refers to substances derived from natural resources such as plants. Examples of biomass include, but are not limited to, agricultural, sugar, wood chips, plant residues after useful components are obtained, plant-derived ethanol, and biomass naphtha. Examples of monomers derived from biomass (biomass monomers) include, but are not limited to, butadiene derived from biomass and aromatic vinyl derived from biomass. Examples of butadiene include 1,2-butadiene and 1,3-butadiene. Examples of aromatic vinyl include, but are not limited to, styrene. In addition, the method for producing biomass monomers is not particularly limited, and examples include biological and/or chemical and/or physical conversion of animals and plants. A representative example of biological conversion is fermentation by microorganisms, and examples of chemical and/or physical conversion include those using catalysts, those using high heat, those using high pressure, those using electromagnetic waves, those using critical liquids, and combinations thereof.

The polymer synthesized from a biomass monomer component (biomass polymer) is not particularly limited, and examples thereof include polybutadiene rubber synthesized from butadiene derived from biomass, aromatic vinyl/butadiene copolymer synthesized from butadiene derived from biomass and/or aromatic vinyl derived from biomass, etc. Examples of the aromatic vinyl/butadiene copolymer include styrene butadiene rubber synthesized from butadiene derived from biomass and/or styrene derived from biomass.

Whether the raw material of a polymer is derived from biomass can be determined by the percent modern carbon (pMC) measured in accordance with ASTM D6866-10.

The pMC is a ratio of the $^{14}C$ concentration of a sample to the $^{14}C$ concentration of a modern standard reference, and this value is used as an index of the biomass ratio of a compound (rubber). The significance of this value is described below.

In one mole of carbon atoms ($6.02 \times 10^{23}$), there are about $6.02 \times 10^{11}$ $^{14}C$, which is about one trillionth of the number of normal carbon atoms. $^{14}C$ is called a radioisotope, and its half-life is 5730 years, and it decreases regularly. It takes 226,000 years for all of them to decay. Therefore, in fossil fuels such as coal, oil, and natural gas, which are thought to have passed more than 226,000 years after carbon dioxide in the atmosphere was absorbed and fixed to plants and other things, all of the $^{14}C$ elements that were contained in them at the time of fixation have decayed. Therefore, in the present 21st century, fossil fuels such as coal, oil, and natural gas do not contain any $^{14}C$ elements at all. Therefore, chemical substances produced using these fossil fuels as raw materials do not contain any $^{14}C$ elements at all.

On the other hand, $^{14}C$ is constantly produced by nuclear reactions caused by cosmic rays in the atmosphere, and the amount of $^{14}C$ in the atmospheric environment on Earth is constant, balancing with decrease due to radioactive decay. Therefore, $^{14}C$ concentration of materials derived from biomass resources circulating in the current environment is approximately $1 \times 10^{-12}$ mol% with respect to the total C atoms, as mentioned above. Therefore, difference between these values can be used to calculate a ratio (biomass ratio) of compounds derived from natural resources (compounds derived from biomass resources) in a certain compound (rubber).

This $^{14}C$ is generally measured as follows. Accelerator mass spectrometry based on a tandem accelerator is used to measure the $^{13}C$ concentration ($^{13}C/^{12}C$) and the $^{14}C$ concentration ($^{14}C/^{12}C$). In the measurement, the $^{14}C$ concentration in circulating carbon in nature as of 1950 is adopted as the modern standard reference for the $^{14}C$ concentration. As a specific standard substance, an oxalic acid standard provided by NIST (National Institute of Standards and Technology) is used. The specific radioactivity of carbon (radioactivity of $^{14}C$ per gram of carbon) in this oxalic acid is separated for each carbon isotope, and $^{13}C$ is corrected to a constant value, and the value corrected for decay from 1950 to the date of measurement is used as the standard $^{14}C$ concentration value (100%). The ratio of this value to the value of the actually measured sample is the pMC value.

Therefore, if rubber is made from 100% biomass (natural) derived materials, it will show a value of about 110 pMC, as it is often not 100 under normal conditions, although there are regional differences. On the other hand, when the $^{14}C$ concentration is measured for chemical substances derived from fossil fuels such as petroleum, it will show a value of about 0 pMC (for example, 0.3 pMC). This value corresponds to the biomass ratio of 0% mentioned above.

For the above reasons, it is preferable from the standpoint of environmental protection (sustainability) to use a material such as rubber having a high pMC value, that is, a material such as rubber having a high biomass ratio for the rubber composition.

(b) Compounding materials other than rubber components

(b-1) Filler

As described above, the rubber composition for tread preferably contains silica as a reinforcing agent, and may contain other fillers, such as carbon black, calcium carbonate, talc, alumina, clay, aluminum hydroxide, and mica. When silica is used, it is preferable to use it in combination with a silane coupling agent.

As for content of a filler, as described above, the content of silica with respect to 100 parts by mass of the rubber component is preferably 80 parts by mass or more, 90 parts by mass or more, 100 parts by mass or more, 120 parts by mass or more, 130 parts by mass or more, or 150 parts by mass or more. On the other hand, the upper limit is preferably 180 parts by mass or less, 160 parts by mass or less, or 150 parts by mass or less. The total content of silica and other fillers is preferably 90 parts by mass or more, 100 parts by mass or more, 110 parts by mass or more, or 130 parts by mass or more with respect to 100 parts by mass of the rubber component. On the other hand, from the viewpoint of dispersibility in a rubber composition, the upper limit is preferably 190 parts by mass or less, 170 parts by mass or less, 160 parts by mass or less, or 150 parts by mass or less.

(i) Silica

From the viewpoint of obtaining good durability, BET specific surface area of silica is preferably more than 100 $m^2/g$, more than 130 $m^2/g$, 150 $m^2/g$ or more, or 175 $m^2/g$ or more. On the other hand, it is preferably less than 250 $m^2/g$, less than 200 $m^2/g$, or 180 $m^2/g$ or less. BET specific surface area is an $N_2SA$ value measured by BET method in accordance with ASTM D3037-93.

The particle size (average primary particle size) of silica is preferably 17 nm or less, taking into consideration ease of friction with the polymer, etc. The lower limit is preferably, for example, more than 8 nm. It is thought that use of silica having a small particle size increases frequency of contact with polymer (styrene domain), thereby further improving dry grip performance.

The average primary particle diameter can be calculated by directly observing silica particles extracted from a rubber composition cut out from a tire using a transmission electron microscope (TEM) or the like, calculating an equivalent cross-sectional area diameter from obtained area of each silica particle, and determining an average value.

The silica is not particularly limited, and for example, silica commonly used in the tire industry, such as silica prepared by a dry method (anhydrous silica) or silica prepared by a wet method (hydrated silica), can be used. Commercially available products include products from Evonik Industries Co., Ltd., Rhodia Co., Ltd., Tosoh Silica Co., Ltd., Solvay Japan Co., Ltd., Tokuyama Co., Ltd., etc.

The raw material of silica is not particularly limited, and may be, for example, a mineral-derived raw material such as quartz, a biological raw material such as rice husk (for example, silica made from biomass materials such as rice husk), or silica recycled from a product containing silica. Among them, hydrated silica prepared by a wet method is preferred because it has a large amount of silanol groups. These kinds of silica may be used alone or in combination of two or more. From the viewpoint of environmental protection, sustainable silica (silica made from biomass materials or silica recycled from a product containing silica) is preferred.

Silica made from biomass materials (biomass silica) can be obtained, for example, by extracting silicate from rice husk ash obtained by burning rice husks using a sodium hydroxide solution, and then reacting the silicate with sulfuric acid in the same manner as conventional wet-process silica to produce a silicon dioxide precipitate, which is then filtered, washed with water, dried, and pulverized.

The silica recycled from a product containing silica (recycled silica) can be, for example, silica recycled from a product containing silica, such as electronic parts such as semiconductors, tires, desiccants, and filtering materials such as diatomaceous earth. The recycle method is not particularly limited, and examples include pyrolysis and decomposition by electromagnetic waves. Among them, silica recycled from electronic parts such as semiconductors or tires is preferred.

When silica crystallizes, it does not dissolve in water and its component silicic acid cannot be used. By controlling the combustion temperature and combustion time, the crystallization of silica in rice husk ash can be suppressed (see JP 2009-2594 A, Akita Prefectural University Web Journal B/2019, vol. 6, pp. 216-222, etc.).

As an amorphous silica extracted from rice husks, commercially available products from Wilmar Co., etc. can be used.

These silicas may be used alone or in combination of two or more. From the viewpoint of environmental protection (sustainability), it is preferable to use sustainable silica such as biomass silica obtained from biomass as a raw material or recycled silica obtained from recycled silica of used goods or waste materials.

(ii) Silane coupling agent

When silica is used, it is preferable to use a silane coupling agent in combination to increase the dispersibility of the silica and to improve the mechanical properties and moldability by reacting with the silica.

The silane coupling agent is not particularly limited, and examples thereof include sulfide-based ones such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide; mercapto-based ones such as 3-mercaptopropyltrimethoxysilane, 2-mercaptoethyltriethoxysilane, and NXT and NXT-Z manufactured by Momentive; vinyl-based ones such as vinyl triethoxysilane, and vinyl trimethoxysilane; amino-based ones such as 3-aminopropyltriethoxysilane and 3-aminopropyltrimethoxysilane; glycidoxy-based ones such as $\gamma$-glycidoxypropyltriethoxysilane and $\gamma$-glycidoxypropyltrimethoxysilane; nitro-based ones such as 3-nitropropyltrimethoxysilane, and 3-nitropropyltriethoxysilane; and chloro-based ones such as 3-chloropropyltrimethoxysilane and 3-chloropropyltriethoxysilane. These may be used alone or in combination of two or more kinds.

As the silane coupling agent, for example, products of Evonik Industries Co., Ltd., Momentive Co., Ltd., Shin-Etsu Silicone Co., Ltd., Tokyo Chemical Industry Co., Ltd., Azumax Co., Ltd., DuPont Toray Specialty Materials, Inc., etc. can be used.

The content of the silane coupling agent is preferably, for example, more than 3 parts by mass, 5 parts by mass or more, 6 parts by mass or more, 7 parts by mass or more, or 7 parts by mass or more with respect to 100 parts by mass of silica. The upper limit is preferably, for example, less than 15 parts by mass, 12 parts by mass or less, 10.5 parts by mass or less, 9 parts by mass or less, or 8.4 parts by mass or less.

(iii) Carbon black

Carbon black is preferably used for improving crack growth resistance, durability, resistance to deterioration due to ultraviolet light, and the like of the tire.

From the viewpoint of reinforcing rubber, the nitrogen adsorption specific surface area ($N_2SA$) of carbon black is preferably, for example, 30 $m^2/g$ or more, 50 $m^2/g$ or more, 60 $m^2/g$ or more, 80 $m^2/g$ or more, 100 $m^2/g$ or more. On the other hand, from the viewpoint of heat generation, it is preferably 250 $m^2/g$ or less, 150 $m^2/g$ or less, 120 $m^2/g$ or less, or 110 $m^2/g$ or less. The nitrogen adsorption specific surface area of carbon black is measured in accordance with ASTM D4820-93.

Carbon black is not particularly limited, and examples thereof include furnace blacks (furnace carbon blacks) such as SAF, ISAF, HAF, MAF, FEF, SRF, GPF, APF, FF, CF, SCF, and ECF; acetylene blacks (acetylene carbon blacks); thermal blacks (thermal carbon blacks) such as FT and MT; and channel blacks (channel carbon blacks) such as EPC, MPC, and CC. Examples of product numbers include N134, N110, N220, N234, N219, N339, N330, N326, N351, N550, and N762. These may be used alone or in combination of two or more.

The raw material for carbon black may be a biomass material such as lignin, vegetable oil, or a pyrolysis oil obtained by pyrolyzing rubber products containing carbon black, such as waste tires (recycled carbon black), in addition to mineral oil. The use of such sustainable carbon black is preferable from the viewpoint of environmental protection.

The carbon black may be produced by combustion, such as in a furnace process, by hydrothermal carbonization (HTC), or by pyrolysis of methane, such as in a thermal black process.

As commercially available products, products of Asahi Carbon Co., Ltd., Cabot Japan Co., Ltd., Tokai Carbon Co., Ltd., Mitsubishi Chemical Co., Ltd., Lion Corporation, Nippon Steel Carbon Co., Ltd., Columbia Carbon Co., Ltd., etc. can be used. These may be used alone or in combination of two or more kinds.

The content of carbon black with respect to 100 parts by mass of the rubber component is preferably 3 parts by mass or more, and more preferably 5 parts by mass or more, and the upper limit is, for example, preferably 15 parts by mass or less, and more preferably 10 parts by mass or less.

(iv) Other fillers

In addition to carbon black and silica described above, a rubber composition for tread may further contain, as necessary, a filler commonly used in the tire industry, such as graphite, calcium carbonate, talc, alumina, clay, aluminum hydroxide, mica, or magnesium sulfate. The content of these filler is, for example, more than 0.1 parts by mass and less than 150 parts by mass with respect to 100 parts by mass of a rubber component.

(b-2) Softener component

In consideration of proper dispersion of powder materials during kneading, it is preferable to use a softener component as necessary in a rubber composition for tread. The softener component here refers to a material (plasticizer component) that imparts plasticity to rubber components, is a concept that includes both softener components that are liquid at 25°C and softener components that are solid at 25°C, and is a component that can be extracted from a vulcanized rubber with acetone.

Specific examples of softener components include resin components, oils, liquid polymers (liquid rubbers), and ester-based plasticizers. These softener components may be derived from mineral resources such as petroleum and natural gas, may be derived from biomass, or may be derived from naphtha recycled from rubber products or non-rubber products. In addition, low molecular weight hydrocarbon components obtained by pyrolysis and extraction of used tires or products containing various components may be used as softener components. Among these, softener components derived from biomass or recycled materials are preferred as sustainable softener components.

These softener components may be used alone or in combination of two or more. The content of the softener component per 100 parts by mass of the rubber component is preferably 27.5 parts by mass or more, 40 parts by mass or more, 50 parts by mass or more, 60 parts by mass or more, or 65 parts by mass or more. The upper limit is, for example, preferably 100 parts by mass or less, 80 parts by mass or less, or 72.5 parts by mass or less. The content of the softener component includes the amount of oil contained in the rubber (oil-extended rubber) and the like.

(i) Oil

Examples of oil include mineral oil, vegetable oil, and animal oil. From the viewpoint of life cycle assessment, waste oil after use in rubber mixers or engines, or refined waste cooking oil used in restaurants may also be used.

(i -1) Mineral oil

Mineral oil refers to oil derived from mineral resources such as petroleum and natural gas. Examples of mineral oil include paraffinic oil (mineral oil), naphthenic oil, and aromatic oil.

Specific examples of mineral oils include Mild Extract Solvated (MES), Distillate Aromatic Extract (DAE), Treated Distillate Aromatic Extract (TDAE), Treated Residual Aromatic Extract (TRAE), and Residual Aromatic Extract (RAE).

In addition, to be environmentally friendly, oils with low polycyclic aromatic compound (PCA) content may be used. Examples of oils with low PCA include MES, TDAE, and heavy naphthenic oils.

Examples of commercially available mineral oils include paraffinic, aromatic, and naphthenic oils, and can be products from, for example, Idemitsu Kosan Co., Ltd., Sankyo Yuka Kogyo Co., Ltd., ENEOS Corporation, Orisoi Corporation, H&R Corporation, Toyokuni Oil Mills Co., Ltd., Showa Shell Sekiyu K.K., and Fuji Kosan Co., Ltd. These may be used alone or in combination of two or more.

(i-2) Vegetable oil

Examples of vegetable oils include linseed oil, rapeseed oil, safflower oil, soybean oil, corn oil, cottonseed oil, rice bran oil, tall oil, sesame oil, perilla oil, castor oil, tung oil, pine oil, pine tar oil, sunflower oil, and coconut oil, palm oil, palm kernel oil, olive oil, camellia oil, jojoba oil, macadamia nut oil, peanut oil, grapeseed oil, and wood wax.

Furthermore, vegetable oils also include refined oils (salad oil, etc.) obtained by refining each of the above oils, trans-esterified oils obtained by transesterification, hydrogenated oils, thermo-polymerized oils obtained by thermal polymerization, oxidized polymerized oils obtained by oxidation, waste cooking oils that have been recovered from edible oils, and the like. Note that the vegetable oil may be liquid or solid at room temperature (25°C). These may be used alone or in combination of two or more.

The vegetable oil preferably contains acylglycerol, and more preferably contains triacylglycerol. Here, acylglycerol refers to a compound in which a hydroxyl group of glycerin and a fatty acid are ester bonded. The acylglycerol is not particularly limited, and may be 1-monoacylglycerol, 2-monoacylglycerol, 1,2-diacylglycerol, 1,3-diacylglycerol, or triacylglycerol. Furthermore, the acylglycerol may be a monomer, a dimer, or a polymer of trimer or more. Dimer or more acylglycerols can be obtained by thermal polymerization, oxidative polymerization, or the like. The acylglycerol may be liquid or solid at room temperature (25°C).

The method for confirming whether acylglycerol is contained in the rubber composition is not particularly limited, but it can be confirmed by $^1$H-NMR measurement. For example, a rubber composition containing triacylglycerol is immersed in deuterated chloroform at room temperature (25°C) for 24 hours to remove the rubber composition, and then $^1$H-NMR is measured at room temperature, with setting, signals nearby 5.26 ppm, nearby 4.28 ppm, and nearby 4.15 ppm are observed, when the tetramethylsilane (TMS) signal is set to 0.00 ppm. Since the signals are presumed to be signals

originate from the hydrogen atom bonded to the carbon atom adjacent to the oxygen atom of the ester group, the content of acylglycerol can be confirmed. Note that "nearby" here refers to a range of $\pm$0.10 ppm.

The fatty acid is not particularly limited, and may be an unsaturated fatty acid or a saturated fatty acid. Examples of the unsaturated fatty acid include monounsaturated fatty acids such as oleic acid, and polyunsaturated fatty acids such as linoleic acid and linolenic acid. Examples of the saturated fatty acid include butyric acid and lauric acid.

Among them, a fatty acid with few double bonds, i.e., a saturated fatty acid or a monounsaturated fatty acid is preferable, and oleic acid is preferable. As the vegetable oil containing such a fatty acid, for example, a vegetable oil containing a saturated fatty acid or a monounsaturated fatty acid may be used, or a vegetable oil modified by transesterification or the like may be used. In addition, to produce a vegetable oil containing such a fatty acid, a plant may be improved by breeding, genetic recombination, genome editing, or the like.

Examples of vegetable oils include products commercially available from Idemitsu Kosan Co., Ltd., Sankyo Yuka Kogyo Co., Ltd., ENEOS Co., Ltd., Orisoi Co., Ltd., H&R Co., Ltd., Toyokuni Oil Co., Ltd., Fuji Kosan Co., Ltd., and Nisshin Oillio Group Co., Ltd.

(ii) Liquid rubber

Liquid rubber is a polymer that is in a liquid state at room temperature (25°C), and is a rubber component that can be extracted from a vulcanized tire by acetone extraction. Examples of the liquid rubber include farnesene-based polymers, liquid diene polymers, and hydrogenated products thereof.

The farnesene-based polymer is a polymer obtained by polymerizing farnesene, and has a structural unit based on farnesene. Farnesene includes isomers such as $\alpha$-farnesene ((3E, 7E) -3,7,11-trimethyl-1,3,6,10-dodecatetraene) and $\beta$-farnesene (7,11-dimethyl-3-methylene-1, 6,10-dodecatrien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-equivalent weight average molecular weight (Mw) measured by gel permeation chromatography (GPC) of, for example, more than $1.0 \times 10^3$ and less than $2.0 \times 10^5$. Here, Mw of the liquid diene polymer is a polystyrene conversion value measured by gel permeation chromatography (GPC).

As a liquid rubber, for example, products manufactured by Kuraray Co., Ltd., Clay Valley Co., Ltd., etc. can be used.

(iii) Resin component

The resin component also functions as a tackifying component, and may be solid or liquid at room temperature. Specific examples of the resin components include rosin-based resin, styrene resin, coumaron-based resin, terpene resin, C5 resin, C9 resin, C5C9 resin, and acrylic resin, and two or more of these may be used in combination. These resin components may be provided with a modified group capable of reacting with silica, etc., as necessary.

Rosin-based resin is a resin whose main component is rosin acid obtained by processing pine resin. This rosin-based resin (rosins) can be classified according to the presence or absence of modification, and can be classified into unmodified rosin (unmodified rosin) and modified rosin (rosin derivative). Examples of unmodified rosin include tall rosin (also known as tall oil rosin), gum rosin, wood rosin, disproportionated rosin, polymerized rosin, hydrogenated rosin, and other chemically modified rosins. The modified rosin is a modified version of unmodified rosin, and examples thereof include rosin esters, unsaturated carboxylic acid-modified rosins, unsaturated carboxylic acid-modified rosin esters, amide compounds of rosin, and amine salts of rosin.

The styrene-based resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more of the styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; $\alpha$, $\beta$-unsaturated carboxylic acids such as maleic anhydride, and acid anhydrides thereof.

Among coumaron-based resins, coumaron indene resin is preferred. Coumaron indene resin is a resin containing coumaron and indene as monomer components that constitute the skeleton (main chain) of the resin. In addition to

coumaron and indene, a monomer component such as styrene, α-methylstyrene, methylindene, and vinyltoluene may be contained in the skeleton.

The hydroxyl value (OH value) of the coumarone-indene resin is, for example, more than 15 mg KOH/g and less than 150 mg KOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as a hydrogenated terpene resin obtained by hydrogenating the terpene resin. Examples of the terpene phenol include a resin obtained by copolymerizing the above-mentioned terpene compound and the phenolic compound, and a resin obtained by hydrogenating above-mentioned resin. Specifically, a resin obtained by condensing the above-mentioned terpene compound, the phenol compound and the formalin can be mentioned. Examples of the phenolic compound include phenol, bisphenol A, cresol, and xylenol. Examples of the aromatic-modified terpene resin include a resin obtained by modifying a terpene resin with an aromatic compound, and a resin obtained by hydrogenating above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumaron, and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The "C9 resin" refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As specific examples, a coumarone-indene resin, a coumarone resin, an indene resin, and an aromatic vinyl resin are preferably used. As the aromatic vinyl resin, a homopolymer of α-methylstyrene (AMS resin) or styrene or a copolymer of α-methylstyrene and styrene is preferable because it is economical, easy to process, and excellent in heat generation properties. A copolymer of α-methylstyrene and styrene is preferred. As the aromatic vinyl-based resin, for example, those commercially available from Kraton Co., Eastman Chemical Co., etc. can be used.

The "C5C9 resin" refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA Corporation, etc. can be used.

Although the acrylic resin is not particularly limited, for example, a solvent-free acrylic resin can be used.

As the solvent-free acrylic resin, a (meth) acrylic resin (polymer) synthesized by a high-temperature continuous polymerization method (high-temperature continuous lump polymerization method: a method described in US 4,414,370 B, JP 84-6207 A, JP 93-58805 A, JP 89-313522 A, US 5,010,166 B, Toa Synthetic Research Annual Report TREND2000 No. 3, p42-45, etc.) without using polymerization initiators, chain transfer agents, organic solvents, etc. as auxiliary raw materials as much as possible, can be mentioned. In the present invention, (meth) acrylic means methacrylic and acrylic.

Examples of monomer components constituting the acrylic resin include (meth)acrylic acid, (meth)acrylic acid esters (alkyl esters, aryl esters, aralkyl esters, etc.), (meth)acrylamide, and (meth)acrylic acid derivatives such as (meth) acrylamide derivatives.

As the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth)acrylic acid or (meth)acrylic acid derivative.

The acrylic resin may be a resin composed of only a (meth) acrylic component or a resin also having a component other than the (meth) acrylic component. The acrylic resin may have a hydroxyl group, a carboxyl group, a silanol group, or the like.

Examples of the resin component which can be used include products of Maruzen Petrochemical Co., Ltd.,

Sumitomo Bakelite Co., Ltd., Yasuhara Chemical Co., Ltd., Tosoh Corporation, Rutgers Chemicals Co., Ltd., BASF Co., Ltd., Kraton Co., Ltd., Nitto Chemical Co., Ltd., Nippon Shokubai Co., Ltd., ENEOS Co., Ltd., Arakawa Chemical Industry Co., Ltd., and Taoka Chemical Industry Co., Ltd.

(b-3) Wax

The rubber composition for tread may contain wax. The content of wax is, for example, preferably 0.5 part by mass or more, 1.0 part by mass or more, 1.5 parts by mass or more, 2.5 parts by mass or more based on 100 parts by mass of the rubber component. On the other hand, the upper limit is preferably 20 parts by mass or less, 15 parts by mass or less, 10 parts by mass or less.

The wax is not particularly limited, and any wax commonly used in the tire industry can be suitably used. Examples of the wax include mineral waxes and vegetable-derived waxes. Mineral waxes refer to waxes derived from mineral resources such as oil and natural gas. Vegetable waxes refer to waxes derived from natural resources such as plants. Among them, mineral waxes are preferred.

Examples of the wax derived from plants include rice wax, carnauba wax, and candelilla wax. Examples of mineral wax include paraffin wax, microcrystalline wax, and selected special waxes thereof, and paraffin wax is preferred. In the present invention, wax does not contain stearic acid.

As the wax, for example, commercially available waxes from Ouchi Shinko Chemical Industry Co., Ltd., Nippon Seiro Co., Ltd., Paramelt Co., Ltd., etc. may be used. These waxes may be used alone or in combination of two or more kinds.

(b-4) Anti-aging agents

The rubber composition may contain an anti-aging agent. The content of the anti-aging agent is, for example, preferably more than 1 part by mass, and less than 10 parts by mass, with respect to 100 parts by mass of the rubber component.

The anti-aging agent is not particularly limited, and examples thereof include naphthylamine-based anti-aging agents such as phenyl-$\alpha$-naphthylamine; diphenylamine-based anti-aging agents such as octylated diphenylamine and 4,4'-bis($\alpha$,$\alpha$'-dimethylbenzyl)diphenylamine; p-phenylenediamine-based anti-aging agents such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline-based anti-aging agents such as 2,2,4-trimethyl-1,2-dihydroquinoline polymers; monophenol-based anti-aging agents such as 2,6-di-t-butyl-4-methylphenol and styrenated phenol; and bis-, tris-, and polyphenol-based anti-aging agents such as tetrakis-[methylene-3-(3',5'-di-t-butyl-4'-hydroxyphenyl)propionate]methane. Among these, p-phenylenediamine-based anti-aging agents and quinoline-based anti-aging agents are preferred, and N-(1,3-dimethylbutyl)-N'-phenyl-p-phenylenediamine and 2,2,4-trimethyl-1,2-dihydroquinoline polymers are preferred. These may be used alone or in combination of two or more.

As commercially available products, for example, products from Seiko Chemical Co., Ltd., Sumitomo Chemical Co., Ltd., Ouchi Shinko Chemical Co., Ltd., Flexsys Co., Ltd., etc. can be used.

(b-5) Stearic acid

The rubber composition for tread may contain, as a lubricant, a lubricant based on a fatty acid derivative such as stearic acid. As the stearic acid, a conventionally known one can be used. Specifically, for example, products of NOF Corporation, Kao Corporation, Fujifilm Wako Pure Chemical Co. Ltd., Chiba Fatty Acid Co. Ltd., etc. can be used. In addition, Struktol WB16 manufactured by Struktol Co., Ltd., and the like can also be used.

The content of stearic acid is, for example, preferably more than 0.5 parts by mass, 1.5 parts by mass or more, with respect to 100 parts by mass of the rubber component. The upper limit is preferably less than 10.0 parts by mass.

(b-6) Zinc oxide

The rubber composition for tread may contain zinc oxide. The content of zinc oxide is, for example, preferably more than 0.5 parts by mass, or 2.5 parts by mass or more, with respect to 100 parts by mass of the rubber component. The upper limit is preferably less than 10 parts by mass. As the zinc oxide, a conventionally known product can be used, and, for example, products of Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc. can be used.

(b-7) Crosslinking agents and vulcanization accelerators

The rubber composition for tread preferably contains a crosslinking agent such as sulfur. The content of the crosslinking agent is, for example, preferably more than 0.1 parts by mass, or 1.5 parts by mass or more, with respect to 100 parts by mass of the rubber component. The upper limit is preferably less than 10.0 parts by mass. The sulfur content is pure sulfur content, and in the case of using insoluble sulfur, it is the content excluding oil content.
Examples of sulfur include powdered sulfur, precipitated sulfur, colloidal sulfur, insoluble sulfur, highly dispersible sulfur, soluble sulfur, and the like which are generally used in the rubber industry. These may be used alone or in combination of two or more kinds.
As sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.
Cross-linking agents other than sulfur may be used. Specific examples of the cross-linking agent other than sulfur include vulcanizing agents containing a sulfur atom such as Tackirol V200 manufactured by Taoka Chemical Industry Co., Ltd., DURALINK HTS (1,6-hexamethylene-sodium dithiosulfate dihydrate) manufactured by Flexsys Co., Ltd., and KA9188 (1,6-bis (N, N'-dibenzylthiocarbamoyldithio) hexane; hybrid crosslinking agent) manufactured by Lanxess Co., Ltd., and organic peroxides such as dicumylperoxide.
The rubber composition for tread preferably contains a vulcanization accelerator. The content of the vulcanization accelerator is, for example, preferably more than 0.3 parts by mass, or 5.0 parts by mass or more, with respect to 100 parts by mass of the rubber component. The upper limit is, preferably less than 10.0 parts by mass.
Examples of the vulcanization accelerator include
thiazole-based vulcanization accelerators such as 2-mercaptobenzothiazole, di-2-benzothiazolyl disulfide, and N-cyclohexyl-2-benzothiadylsulfenamide; thiuram-based vulcanization accelerators such as tetramethylthiuram disulfide (TMTD), tetrabenzyltiuram disulfide (TBzTD), and tetrakis (2-ethylhexyl) thiuram disulfide (TOT-N); sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and guanidine-based vulcanization accelerators such as diphenylguanidine, di-ortho-tolylguanidine and ortho-tolylbiguanidine. These may be used alone or in combination of two or more.

(b-8) Other

In addition to the above-mentioned components, the rubber composition for tread may contain additives commonly used in the tire industry, such as organic fillers, for example, cellulose fibers, and organic peroxides, as necessary. The content of these additives is, for example, more than 0.1 parts by mass and less than 50 parts by mass with respect to 100 parts by mass of the rubber component.
In the present invention, among the above-mentioned materials, various materials containing carbon atoms (e.g., rubber, oil, resin, vulcanization accelerator, anti-aging agent, surfactant, etc.) may be derived from carbon dioxide in the atmosphere. As a method for obtaining the compound of the present invention from carbon dioxide, carbon dioxide may be directly converted, or methane obtained through a methanation process for synthesizing methane from carbon dioxide may be converted.

(2) Preparation of rubber composition

The rubber composition for tread can be prepared by a general method, for example, a manufacturing method including a base kneading step of kneading a rubber component with a filler such as silica, and a finish kneading step of kneading a kneaded product obtained in the base kneading step with a crosslinking agent.
The kneading can be carried out using a known (sealed type) kneading machine such as a Banbury mixer, a kneader, or an open roll.
The kneading temperature in the base kneading step is, for example, higher than 50 °C and lower than 200 °C, and the kneading time is, for example, longer than 30 seconds and shorter than 30 minutes. In the base kneading step, in addition to the above-mentioned components, compounding agents conventionally used in the rubber industry, for example, softeners such as oil, stearic acid, zinc oxide, anti-aging agents, waxes, vulcanization accelerators, etc. may be appropriately added and kneaded as necessary.
In the finish kneading step, a kneaded product obtained in the base kneading step is kneaded with a crosslinking agent. The kneading temperature in the finish kneading step is, for example, higher than room temperature and lower than 80 °C, and the kneading time is, for example, longer than 1 minute and shorter than 15 minutes. In the finish kneading step, in addition to the above components, a vulcanization accelerator, zinc oxide, etc. may be appropriately added and kneaded as necessary.

The rubber composition obtained as described above can then be extruded into a predetermined shape to form a tread.

3. Manufacturing Tires

The tire according to the present embodiment can be manufactured by a normal method. First, the rubber composition obtained as described above is molded into a predetermined shape to manufacture a tread. Next, the rubber composition is combined with other rubber components on a tire molding machine to manufacture an unvulcanized tire.

Specifically, an inner liner as a member for ensuring airtightness of the tire, a carcass as a member that withstands load, impact, and filled air pressure received by the tire, a belt as a member that tightly fastens the carcass and increases rigidity of the tread, and bands as members that reinforce the belt are wound around a molding drum, and both ends of the carcass are fixed to both side edges, and beads as members for fixing the tire to a rim are arranged. After molding into a toroidal shape, a tread is pasted to the center of an outer periphery, and sidewall are pasted to an axially outside to form side portions, thereby producing an unvulcanized tire.

The unvulcanized tire thus produced is then heated and pressurized in a vulcanizer to obtain a tire. A vulcanization step can be carried out by applying a known vulcanization method. A vulcanization temperature is, for example, higher than 120 °C and lower than 200 °C, and a vulcanization time is, for example, longer than 5 minutes and shorter than 15 minutes.

The tire obtained as described above exhibits the effects described above in cooperation with each other, and therefore is able to have both dry grip performance and grip performance on snow improved sufficiently.

The tire according to the present invention is not particularly limited to a particular category, and can be suitably used as a tire for passenger car, a tire for a large passenger car, a tire for a large SUV, a tire for a truck/bus, a tire for a motorcycle, a tire for racing, a stud less tire (winter tire), an all-season tire, a run-flat tire, or the like, and is particularly preferably used as a tire for a passenger car.

EXAMPLES

Examples (embodiments) thought to be preferable for carrying ou t the present invention are described below, but the scope of the present invention is not limited to these examples.

Examined are tires (tire size: 275/35R22) comprising tire components, such as a tread, a band, and a belt, formed from various compounding materials shown below, and manufactured to form various belt cord angles, and shown at the bottom of Tables 1 and 2 are results of calculations based on evaluation methods described below regarding dry grip performance, grip performance on snow, and comprehensive performance.

1. Preparation of rubber composition for tread

Rubber compositions for tread are prepared using various compounding materials shown below.

(1) Compounding materials

(a) Rubber component

(i) NR: TSR20
(ii) SBR -1: HPR850 manufactured by ENEOS Materials Corporation (styrene content: 27.5% by mass, vinyl content: 59.0% by mass, non-oil extended)
(iii) SBR-2: ESBR1723 manufactured by ENEOS Materials Corporation
(styrene content: 24% by mass, vinyl content: 17% by mass, extended with 37.5% by mass of oil)
(iv) SBR -3: HPR840 manufactured by ENEOS Materials Corporation (styrene content: 10 % by mass, vinyl content: 42% by mass, non-oil extended)
(v) BR: Ubepol BR150B (high-cis BR) manufactured by Ube Corporation
(vinyl content: 1.5% by mass, cis content: 97% by mass, weight average molecular weight Mw: 440,000)

(b) Compounding materials other than rubber components

(i) Carbon black: Showblack N220 manufactured by Cabot Japan Co., Ltd.
($N_2SA$: 110$m^2$/g)
(ii) Silica: Ultrasil VN3 manufactured by Evonik Industries Co., Ltd.
($N_2SA$: 175$m^2$/g)
(iii) Silane coupling agent: Si266 manufactured by Evonik Industries Co., Ltd.
(bis (3 - triethoxysilylpropyl) disulfide)
(iv) Oil: H&R Co., Ltd. Vivatec 500
(Aromatic process oil: TDAE oil)
(v) Resin component: SYLVARES SA85 manufactured by Kraton (copolymer of α-methylstyrene and styrene, softening point: 85°C)
(vi) Anti-aging agent: ANTIGEN 6C manufactured by Sumitomo Chemical Co., Ltd.
(N-(1,3-dimethylbutyl)-N'-phenyl-p-phenylenediamine)
(vii) Wax: SUNNOCK N manufactured by Ouchi Shinko Chemical Industry Co., Ltd.
(viii) Stearic acid: Stearic acid beads "Tsubaki" manufactured by NOF Corporation
(ix) Zinc oxide: Two types of zinc oxide manufactured by Mitsui Mining & Smelting Co., Ltd.
(x) Sulfur: Powdered sulfur manufactured by Karuizawa Sulfur Co., Ltd.
(xi) Vulcanization accelerator-1: Noccela CZ manufactured by Ouchi Shinko Chemical Industry Co., Ltd.
(N-cyclohexyl-2-benzothiazolylsulfenamide (CBS))
(xii) Vulcanization accelerator-2: Nocceler D manufactured by Ouchi Shinko Chemical Industry Co., Ltd.
(1,3-diphenylguanidine (DPG))

(2) Production of rubber composition for tread

Based on each of the formulations shown in Tables 1 and 2, materials other than sulfur and vulcanization accelerators are kneaded for 5 minutes under a condition of 150°C using a 1.7 L Banbury mixer manufactured by Kobe Steel, Ltd. to obtain kneaded mixtures.

Next, sulfur and vulcanization accelerators are added to the kneaded mixtures, and the mixtures are kneaded for 5 minutes under a condition of 80 °C using an open roll to obtain each of rubber compositions for tread.

2. Tire manufacturing

Next, each of the rubber compositions for tread obtained above is used to form a tread into a predetermined shape.

Each of the treads is then pasted together with other tire components to form an unvulcanized tire. Two belt layers are used as a belt layer on an outer side in the tire radial direction is arranged so that the belt cord angle becomes a value shown in Tables 1 and 2, and a belt layer on an inner side in the tire radial direction is arranged in the opposite direction to the belt layer on the outer side in the tire radial direction. Steel monofilament cords (outer diameter: 0.45 mm, ENDS: 45 cords/5 cm) are used as belt cords. The outer diameter of the belt cords described above is a value measured in accordance with a test method specified in JIS G3510:1992, "Test Methods for Steel Tire Cords". The "diameter of the cord" refers to a diameter in the case when the circumscribing circle of a cross section perpendicular to the longitudinal direction of the cord is a perfect circle, and, in the case of an ellipse or the like, refers to a value measured as an equivalent circle diameter (a diameter of a circle which is assumed as a perfect circle having the same cross-sectional area).

Next, each unvulcanized tire is press-vulcanized for 10 minutes under a condition of 170 °C to produce test tires for Comparative Examples 1 to 5 and Example 1 shown in Table 1, and test tires for Examples 2 to 7 shown in Table 2.

3. Calculation of parameters

Thereafter, for each test tire, a ratio (St/AG) is calculated from a styrene content St (% by mass) of SBR and a belt cord angle AG (degrees).

4. Performance evaluation test

(1) Dry grip performance evaluation

Each test tire is installed to all wheels of a vehicle (FF 2,000 cc made in Japan), and the vehicle is driven around a test course having a dry asphalt surface. Each of twenty (20) drivers gives a sensory evaluation of stability of control during steering on a five-point scale (the higher the number, the better). The total score of evaluations by the 20 drivers is then calculated.

Next, the result of Comparative Example 1 is set to 100, and each of results is indexed according to the following formula to obtain a value of dry grip performance evaluation. A larger value indicates better dry grip performance.

$$\text{Dry grip performance} = [(\text{Result of Test Tire}) / (\text{Result of Comparative example 1})] \times 100$$

(2) Evaluation of grip performance on snow

Each test tire is installed to all wheels of a vehicle (FR, 2000 cc made in Japan), and braking distance from a speed of 30 km/h on snow is measured.

Next, the result of Comparative Example 1 is set to 100, and each of results is indexed according to the following formula to obtain a value of grip performance on snow. The larger value indicates a shorter braking distance and better grip performance on snow.

$$\text{Grip performance on snow} = [(\text{Result of Comparative Example 1}) / (\text{Result of Test tire})] \times 100$$

(3) Comprehensive evaluation

Evaluation results of (1) and (2) obtained in the above for each test tire are added together to arrive at a comprehensive evaluation.

[Table 1]

| | Comparative Example | | | | | Exampl |
|---|---|---|---|---|---|---|
| | 1 | 2 | 3 | 4 | 5 | 1 |
| Compounding of rubber composition for tread (parts by mass) | | | | | | |
| SBR-1 | 60 | 60 | - | - | 60 | - |
| SBR-2<br>(Solid content)<br>(Oil content) | - | - | 82.5<br>(60)<br>(22.5) | 82.5<br>(60)<br>(22.5) | - | 82.5<br>(60)<br>(22.5) |
| NR | 5 | 5 | 5 | 5 | 5 | 5 |
| BR | 35 | 35 | 35 | 35 | 35 | 35 |
| Carbon Black | 10 | 10 | 10 | 10 | 10 | 10 |
| Silica | 90 | 90 | 90 | 90 | 90 | 90 |
| Silane Coupling Agent | 6 | 6 | 6 | 6 | 6 | 6 |
| Oil | 30 | 30 | 7.5 | 7.5 | 30 | 7.5 |
| Resin component | 20 | 20 | 20 | 20 | 20 | 20 |
| Anti-aging agents | 4 | 4 | 4 | 4 | 4 | 4 |
| Wax | 2.5 | 2.5 | 2.5 | 2.5 | 2.5 | 2.5 |
| Stearic acid | 1.5 | 1.5 | 1.5 | 1.5 | 1.5 | 1.5 |
| Zinc oxide | 2.5 | 2.5 | 2.5 | 2.5 | 2.5 | 2.5 |
| Sulfur | 1.5 | 1.5 | 1.5 | 1.5 | 1.5 | 1.5 |
| Vulcanization accelerator-1 | 2.5 | 2.5 | 2.5 | 2.5 | 2.5 | 2.5 |
| Vulcanization accelerator-2 | 2.5 | 2.5 | 2.5 | 2.5 | 2.5 | 2.5 |

(continued)

| Parameters | | | | | | |
|---|---|---|---|---|---|---|
| Styrene content St of SBR (% by mass) | 27.5 | 27.5 | 24 | 24 | 27.5 | 24 |
| Belt cord angle AG (degrees) | 26 | 32 | 26 | 30 | 36 | 32 |
| St/AG | 1.06 | 0.86 | 0.92 | 0.80 | 0.76 | 0.75 |
| Performance evaluation | | | | | | |
| Dry grip performance | 100 | 98 | 89 | 92 | 95 | 107 |
| Grip performance on snow | 100 | 94 | 87 | 93 | 94 | 112 |
| Comprehensive performance | 200 | 192 | 176 | 185 | 189 | 219 |

[Table 2]

| | Example | | | | | |
|---|---|---|---|---|---|---|
| | 2 | 3 | 4 | 5 | 6 | 7 |
| Compounding of rubber composition for tread (parts by mass) | | | | | | |
| SBR-2<br>(Solid content)<br>(oil content) | 82.5<br>(60)<br>(22.5) | - | - | - | - | - |
| SBR-3 | - | 60 | 60 | 60 | 60 | 60 |
| NR | 5 | 5 | 5 | 5 | 16 | 23 |
| BR | 35 | 35 | 35 | 35 | 24 | 17 |
| Carbon Black | 10 | 10 | 10 | 10 | 10 | 10 |
| Silica | 90 | 90 | 120 | 150 | 150 | 150 |
| Silane Coupling Agent | 6 | 6 | 8.4 | 10.5 | 10.5 | 10.5 |
| Oil | 30 | 30 | 45 | 60 | 60 | 60 |
| Resin component | 20 | 20 | 20 | 20 | 20 | 20 |
| Anti-aging agents | 4 | 4 | 4 | 4 | 4 | 4 |
| Wax | 2.5 | 2.5 | 2.5 | 2.5 | 2.5 | 2.5 |
| Stearic acid | 1.5 | 1.5 | 1.5 | 1.5 | 1.5 | 1.5 |
| Zinc oxide | 2.5 | 2.5 | 2.5 | 2.5 | 2.5 | 2.5 |
| Sulfur | 1.5 | 1.5 | 1.5 | 1.5 | 1.5 | 1.5 |
| Vulcanization accelerator-1 | 2.5 | 2.5 | 2.5 | 2.5 | 2.5 | 2.5 |
| Vulcanization accelerator-2 | 2.5 | 2.5 | 2.5 | 2.5 | 2.5 | 2.5 |
| Parameters | | | | | | |
| Styrene content St of SBR (% by mass%) | 24 | 10 | 10 | 10 | 10 | 10 |
| Belt cord angle AG (degrees) | 39 | 32 | 32 | 32 | 32 | 32 |
| St/AG | 0.62 | 0.31 | 0.31 | 0.31 | 0.31 | 0.31 |
| Performance evaluation | | | | | | |
| Dry grip performance | 115 | 123 | 133 | 139 | 137 | 136 |
| Grip performance on snow | 121 | 128 | 126 | 125 | 132 | 135 |
| Comprehensive performance | 236 | 251 | 259 | 264 | 269 | 271 |

Although the present invention is described above based on embodiments, the present invention is not limited to

the above-described embodiments. Various modifications can be made to the above-described embodiments within the same or equivalent scope of the present invention.

[Explanation of symbols]

1. Tire
2. Tread portion
3. Sidewall portion
4. Chafer
5. Bead portion
6. Inner liner
7. Carcass portion
8. Belt layer
8a. Inner layer
8b. Outer layer
9. Filler
10. Band
11. Belt cord
CL. Tire equatorial plane
AG. Belt cord angle

## Claims

**1.** A tire comprising a tread portion and a belt layer provided on an inner side of the tread portion in a tire radial direction, wherein

the tread portion is formed from a rubber composition containing styrene-butadiene rubber having a styrene content of 25% by mass or less as a rubber component,
the belt layer includes a metal cord as a reinforcing cord,
the metal cord is arranged to form an angle of 30 degrees or more with respect to a tire circumferential direction in at least one of the belt layer,
a ratio (St/AG), calculated from a value of the styrene content St (% by mass) of the styrene-butadiene rubber and a value of an angle AG (degrees) formed by the metal cord with respect to the tire circumferential direction, is less than 0.8.

**2.** The tire according to claim 1, wherein the ratio (St/AG) is 0.75 or less, preferably less than 0.7, preferably less than 0.65, preferably 0.62 or less, preferably 0.50 or less, preferably 0.40 or less, or preferably 0.31 or less.

**3.** The tire according to claim 1 or 2, wherein the styrene butadiene rubber has a styrene content of 24% by mass or less, preferably 20% by mass or less, or preferably 15% by mass or less.

**4.** The tire according to any one of claims 1 to 3, wherein the rubber composition contains 30 parts by mass or more, preferably 40 parts by mass or more, preferably 50 parts by mass or more, or preferably 60 parts by mass or more of the styrene-butadiene rubber with respect to 100 parts by mass of the rubber component.

**5.** The tire according to any one of claims 1 to 4, wherein the rubber composition contains 10 parts by mass or more, preferably 15 parts by mass or more, preferably 16 parts by mass or more, preferably 20 parts by mass or more, or preferably 23 parts by mass or more of an isoprene-based rubber with respect to 100 parts by mass of the rubber component.

**6.** The tire according to any one of claims 1 to 5, wherein the rubber composition contains 80 parts by mass or more, preferably 90 parts by mass or more, preferably 100 parts by mass or more, preferably 120 parts by mass or more, preferably 130 parts by mass or more, or preferably 150 parts by mass or more of silica with respect to 100 parts by mass of the rubber component.

**7.** The tire according to any one of claims 1 to 6, wherein the metal cord is a steel cord composed of a monofilament.

8. The tire according to any one of claims 1 to 7, wherein the metal cord forms an angle of 30 degrees or more, preferably 32 degrees or more, and more preferably 34 degrees or more with respect to the tire circumferential direction.

9. The tire according to any one of claims 1 to 8, wherein the belt layer is composed of two or more belt layers, and in the radially outermost belt layer of the tire, the angle formed by the metal cord with respect to the tire circumferential direction is 30 degrees or more, preferably 32 degrees or more, preferably 34 degrees or more, or preferably 36 degrees or more, and in the second and subsequent belt layers, the metal cord is arranged at an angle opposite to the metal cord in an adjacent belt layer.

[Figure 1]

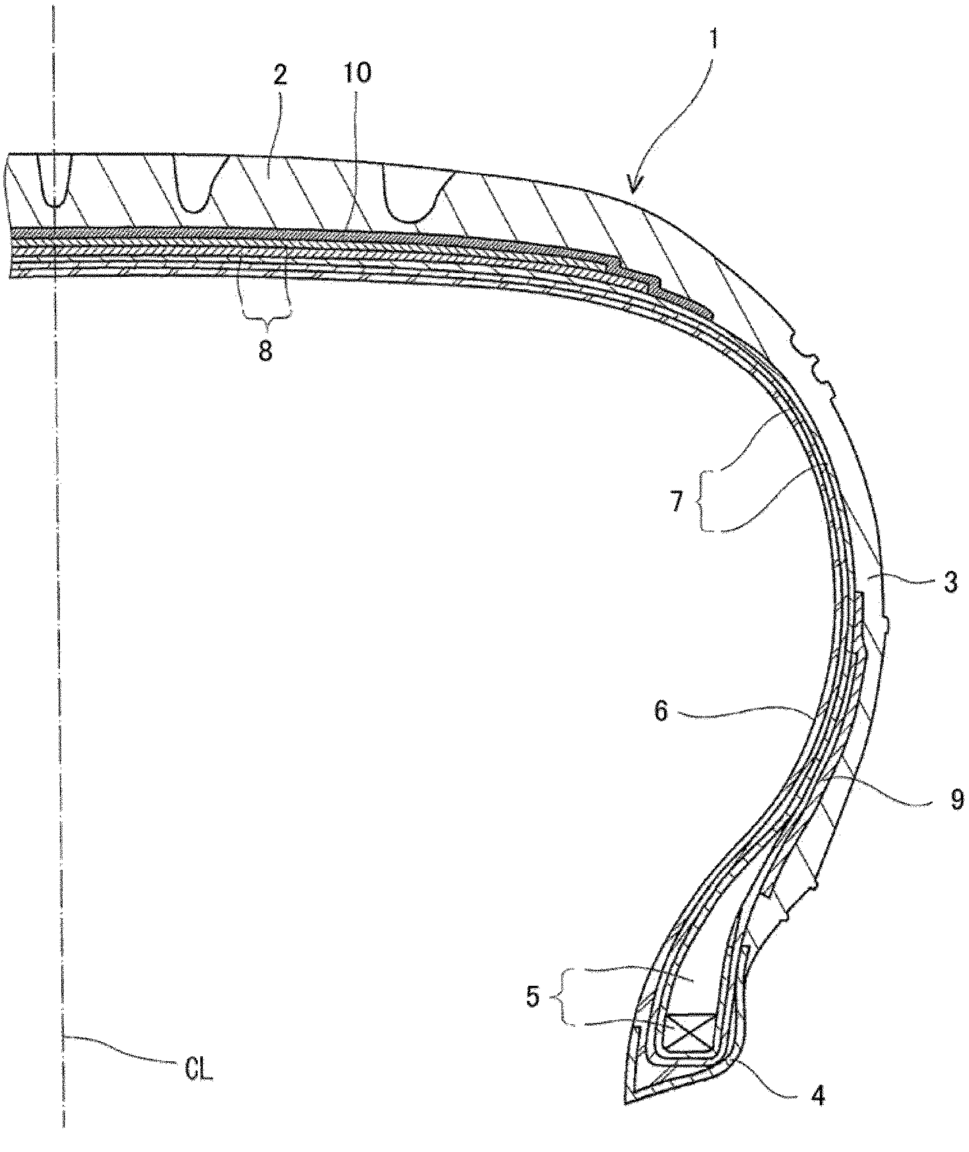

[Figure 2]

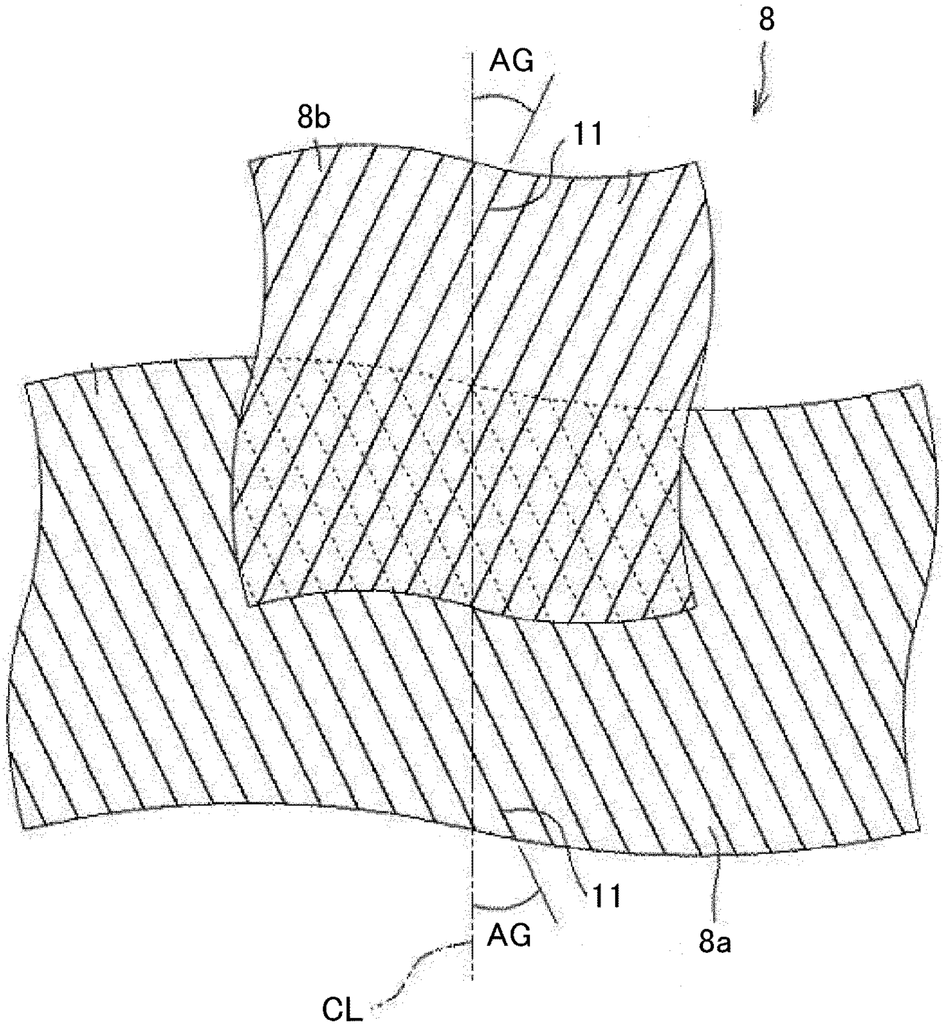

Europäisches Patentamt
European Patent Office
Office européen des brevets

# EUROPEAN SEARCH REPORT

Application Number
EP 25 21 8916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 389 458 A1 (SUMITOMO RUBBER IND [JP]) 26 June 2024 (2024-06-26) * paragraphs [0039] - [0044], [0185], [0194], [0195], [0209], [0306] - [0312]; claims 1-15; figures 1-5; table 1 * ----- | 1-9 | INV. B60C1/00 B60C9/20 |
| E | EP 4 703 148 A1 (SUMITOMO RUBBER IND [JP]) 4 March 2026 (2026-03-04) * paragraphs [0049], [0050], [0075] - [0081], [0112], [0182]; claims 1-10; figures 1-3; tables 1,2 * ----- | 1-9 | |

TECHNICAL FIELDS SEARCHED (IPC)

B60C

The present search report has been drawn up for all claims

1

| Place of search | Date of completion of the search | Examiner |
|---|---|---|
| Munich | 24 April 2026 | Carneiro, Joaquim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 21 8916

This annex lists the patent family members relating to the patent documents cited in the above-mentioned European search report. The members are as contained in the European Patent Office EDP file on The European Patent Office is in no way liable for these particulars which are merely given for the purpose of information.

24-04-2026

| Patent document cited in search report | | Publication date | Patent family member(s) | | Publication date |
|---|---|---|---|---|---|
| EP 4389458 | A1 | 26-06-2024 | CN 118219711 | A | 21-06-2024 |
| | | | EP 4389458 | A1 | 26-06-2024 |
| | | | JP 2024087264 | A | 01-07-2024 |
| EP 4703148 | A1 | 04-03-2026 | EP 4703148 | A1 | 04-03-2026 |
| | | | JP 2026043370 | A | 12-03-2026 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016094552 A
- JP 2024101827 A
- JP 2010111753 A
- JP 2009002594 A
- US 4414370 B
- JP 59006207 A
- JP 5058805 A
- JP 1313522 A
- US 5010166 A
- FR 2000


### Non-patent literature cited in the description


- *Akita Prefectural University Web Journal B/2019*, vol. 6, 216-222
- **B, TOA**. *Synthetic Research Annual Report TREND2000*, 42-45